Europäisches Patentamt

European Patent Office

Office européen des brevets

(11) Veröffentlichungsnummer: **0 291 820 B1**

(12) **EUROPÄISCHE PATENTSCHRIFT**

(45) Veröffentlichungstag der Patentschrift: **25.11.92**

(21) Anmeldenummer: **88107470.2**

(22) Anmeldetag: **10.05.88**

(51) Int. Cl.⁵: **B01F 5/06**, B01J 19/18

(54) **Mischer zum Vermischen mindestens zweier fliessfähiger Stoffe, insbesondere unter Durchführung bzw. Einleitung einer Reaktion während der Vermischung.**

(30) Priorität: **21.05.87 DE 3717058**

(43) Veröffentlichungstag der Anmeldung:
**23.11.88 Patentblatt 88/47**

(45) Bekanntmachung des Hinweises auf die
Patenterteilung:
**25.11.92 Patentblatt 92/48**

(84) Benannte Vertragsstaaten:
**BE DE ES FR GB IT NL**

(56) Entgegenhaltungen:
EP-A- 0 201 767          DE-A- 2 363 888
DE-A- 2 740 789          DE-C- 2 153 268
GB-A- 2 169 814          US-A- 2 206 633

(73) Patentinhaber: **BAYER AG**

**W-5090 Leverkusen 1 Bayerwerk(DE)**

(72) Erfinder: **Sauer, Heinz**
**Hubert-Drecker-Strasse 14**
**W-5068 Odenthal-Hahnenberg(DE)**
Erfinder: **Dallmeyer, Hermann, Dr.**
**Im Alten Driesch 22**
**W-5068 Odenthal(DE)**
Erfinder: **Zarnack, Uwe-Jens, Dr.**
**Ulitzhörn 2**
**W-2212 Brunsbüttel(DE)**
Erfinder: **Keggenhoff, Berthold, Dr.**
**Im Paradies 32**
**W-4150 Krefeld 29(DE)**
Erfinder: **Weber, Bernd, Dipl.-Ing.**
**Gertrudisstrasse 6**
**W-4150 Krefeld 1(DE)**

EP 0 291 820 B1

**Beschreibung**

Die Erfindung betrifft einen Mischer zum Vermischen mindestens zweier fließfähiger Stoffe, insbesondere unter Durchführung bzw. Einleitung einer Reaktion während der Vermischung, bestehend aus einem Gehäuse, in welchem eine mit mindestens einer Rotorscheibe besetzte Welle angeordnet ist, wobei das Gehäuse mit Einlässen für mindestens zwei Stoffe und einem Auslaß versehen ist und die Einlässe in einer Stirnwand des Gehäuses und der Auslaß am anderen Ende des Gehäuses angeordnet sind, wobei ein Einlaß axial zu der mit einer zugespitzten Stirnfläche versehenen Welle zur Zuführung des einen Stoffes und - mit Abstand davon - mindestens ein weiterer Einlaß zur Zuführung mindestens eines weiteren Stoffes vorgesehen sind, daß mindestens eine Rotorscheibe mit einer vorgeordneten Statorscheibe eine Einheit bildet, wobei der Einlaß für den weiteren Stoff direkt gegen die Rotorscheibe mündet, wie aus DE-A-2 363 888 bekannt.

Es ist bekannt, fließfähige Komponenten zum Zwecke der Umsetzung mittels einer Kreiselpumpe zu vermischen (DE-PS 21 53 268 entsprechend US-PS 37 13 833), wobei eine der Komponenten vor der ersten und die zweite Komponente zwischen der ersten und der zweiten Rotorscheibe einer Kreiselpumpe seitlich eingebracht werden. Es hat sich gezeigt, daß sich in einer solchen Kreiselpumpe Klumpen, Anbackungen und Verstopfungen bilden, wenn die Komponenten zu einer Feststoffsuspension umgesetzt werden, wie beispielsweise bei einer Vorphosgenierung von primären Aminen.

Der Mischer gemäß DE-A-2 363 888 weist ein zentrisches und ein dazu konzentrisches Zulaufrohr für Reaktionskomponenten auf, welche beide gegen einen abgestumpften Kegel eines mit Vorsprüngen besetzten Rotors öffnen. Diese Vorsprünge des Rotors wirken mit Vorsprüngen eines entgegenweisenden Stators zusammen, zwischen denen gegebenenfalls noch Zuleitungen für einen Katalysator münden.

Die Aufgabe besteht darin, einen Mischer zu schaffen, mit welchem sich zum Klumpen neigende Stoffe vermischen lassen, und auch Umsetzungen von fließfähigen Komponenten zu Feststoffsuspensionen oder vergleichbaren Produkten frei von Klumpenbildungen, Anbackungen und Verstopfungen durchführen lassen.

Gelöst wird diese Aufgabe dadurch, daß die zugespitzte Stirnfläche der Welle als Spitzkegel ausgebildet ist und unmittelbar auf der ersten Rotorscheibe angeordnet ist und daß der Einlaß für den weiteren Stoff außerhalb des Bereiches des Spitzkegels gegen die erste Rotorscheibe weist.

Dadurch wird erreicht, daß der axial zugeführte Stoffstrom gleichmäßig verteilt die radiale Abströmung an der Rotorscheibe nach außen begünstigt und dabei mit dem zugeführten weiteren Stoff beaufschlagt wird, so daß ein Gemischfilm entsteht, welcher unter fortschreitender Vermischung bzw. Reaktion durch den Spalt zwischen Rotorscheibe und Innenwandung des Gehäuses abfließt. Der Übergang von der zugespitzen Welle zur Rotorscheibe läßt sich strömungsgünstig ausführen. Da auf diese Weise kaum Rückvermischung stattfinden kann, ist das Verweilzeitspektrum in vorteilhafter Weise sehr eng; als Folge davon ist die Gefahr von Klumpenbildungen außerordentlich gering.

Gemäß einer weiteren besonderen Ausführungsform sind mehrere Einlässe für einen weiteren Stoff in Form von mindestens einem Kranz angeordnet. Selbstverständlich sind dabei die Einlässe bzw. die als Düsen gestalteten Einlässe vorzugsweise in regelmäßigen Winkelabständen angeordnet, wodurch die Strömungs- und Vermischungsverhältnisse begünstigt werden.

Die Rotorscheibe und/oder Statorscheibe läßt sich mit Rührelementen versehen. Solche Rührelemente fördern insbesondere bei hohen Durchsatzleistungen die Vermischungsgüte. Geeignet hierfür sind auf die Scheiben aufgesetzte Stifte oder zur Drehachse konzentrische Ringe, welche vorzugsweise mit Durchbrüchen versehen sind Die Rührelemente können aber in einfacher Weise auch darin bestehen, daß die Scheiben selbst Durchbrüche, vorzugsweise in Form von Schlitzen oder Ausschnitten, aufweisen. Im Sinne der Erfindung ist jeder symmetrische Körper eingeschlossen, der im Prinzip aus einer Scheibe durch Ausschnitte und/oder Aufsätze herstellbar ist.

Die Statorscheiben und/oder Rotorscheiben lassen sich auch mit aus Rührelementen gebildeten, ineinandergreifenden Kränzen ausstatten. In einer solchen Statorscheiben-Rotorscheiben-Einheit findet eine intensive Vermischung der beiden Stoffe statt. Sofern die Rührelemente strömungsgünstig gestaltet und angeordnet sind, können sich auch keine strömungstoten Stellen bilden.

Es ist zweckmäßig, wenn die erste Statorscheibe von der mit den Einlässen versehenen Stirnwand des Gehäuses gebildet wird, bzw. wenn äquivalent hierzu die erste Statorscheibe auf der Innenseite der Stirnwand angeordnet ist. Hierbei müssen die Einlässe die Statorscheibe durchdringen. Sind auf der ersten Statorscheibe keine Rührelemente vorgesehen, so hat sie auch keine besondere Bedeutung, d.h. sie könnte in diesem speziellen Fall entfallen.

Zweckmäßigerweise ist vor dem Auslaß ein Laufrad angeordnet. Dadurch wird die Förderwirkung im Mischer zugunsten eines engeren Verweilzeitspektrums verbessert.

Andererseits ist es aber insbesondere bei hohen Durchsatzleistungen notwendig, mehrere Statorscheiben-Rotorscheiben-Einheiten in Reihe anzuordnen, damit ausreichend Zeit für die Vermischung und gegebenenfalls eine Umsetzung der Komponenten vorhanden ist.

Bei mehreren Statorscheiben-Rotorscheiben-Einheiten ist es gegebenenfalls vorteilhaft, mindestens ein Schaufelrad zwischen den Statorscheiben-Rotorscheiben-Einheiten anzuordnen. Auch diese Maßnahme dient der besseren Förderwirkung.

Schließlich ist es möglich, das Gehäuse mit einem Temperiermantel zu versehen. Je nach Erfordernis läßt sich damit Wärme zuführen oder abführen.

Soweit die Stoffe oder das bei der Umsetzung entstehende Produkt toxisch sind, ist der Mischer nach außen hermetisch abzudichten. Dies gilt insbesondere für die Welle. Zur Übertragung der Antriebsleistung eignet sich in einem solchen Falle insbesondere eine mit einem Spalttopf oder einem Spaltrohr versehene Magnetkupplung.

Die Wahl des Werkstoffes für den Mischer hängt ab von den Eigenschaften der zu vermischenden bzw. bei einer Umsetzung entstehenden Stoffe. Hierzu gibt es genügend Vorbilder.

Um möglichst wenig Rückvermischung zu erhalten, ist der Mischer dementsprechend geometrisch ausgelegt. Insbesondere durch die Dimensionierung der Statorscheiben und Rotorscheiben, deren Abstand zueinander und zur Gehäuseinnenwandung bzw. zur Welle läßt sich die Verweilzeit beeinflussen. Sofern Laufräder vorhanden sind, sind natürlich diese auch entsprechend geometrisch gestaltet. Die Drehzahl des Rotors beträgt in der Regel zwischen 200 und 10 000 min$^{-1}$, vorzugsweise zwischen 1000 und 8000 min$^{-1}$.

In der Zeichnung ist der neue Mischer in zwei Ausführungsbeispielen rein schematisch im Schnitt dargestellt und nachstehend näher erläutert. Es zeigen:

    Fig. 1     einen Mischer mit Rührelementen auf den Statorscheiben und auf den Rotorscheiben und

    Fig. 2     einen Mischer mit zwei Laufrädern.

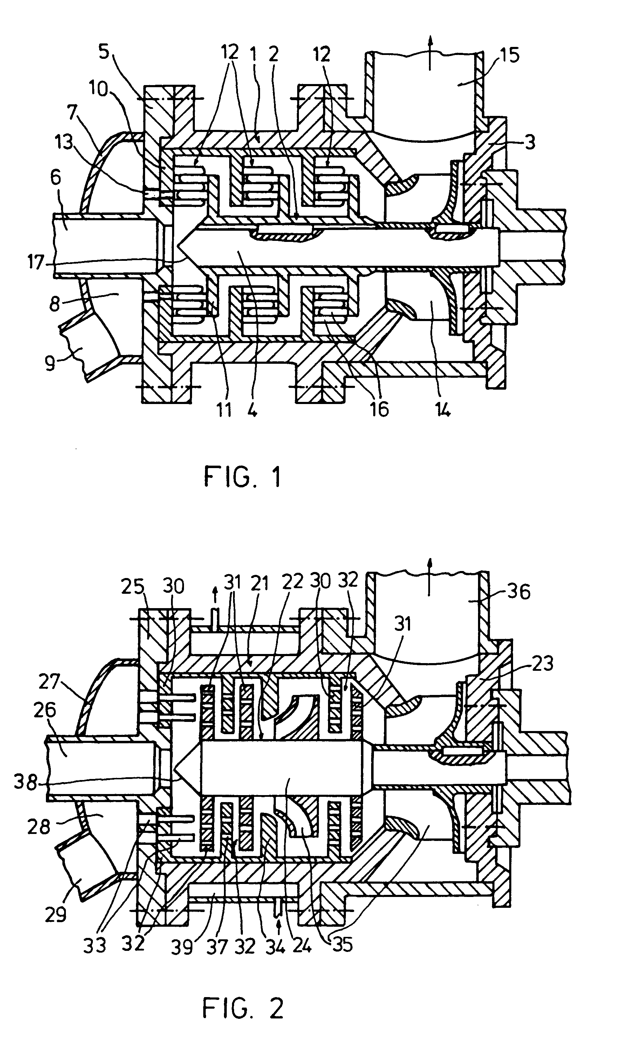

In Fig. 1 besteht der Mischer aus einem Gehäuse 1 und einem Rotor 2. In einer Stirnwand 3 ist die Welle 4 des Rotors 2 geführt und nach außen hermetisch abgedichtet. Der Antrieb erfolgt über eine nicht dargestellte Magnetkupplung. Die andere Stirnwand 5 ist axial zur Welle 4 mit einem Zuführstutzen bzw. Einlaß 6 für die Zuführung eines ersten Stoffes vorgesehen. Der Stirnwand 5 vorgeordnet ist eine Haube 7, so daß eine Kammer 8 gebildet ist. In sie mündet eine Zuführung 9 für einen zweiten Stoff. An der Innenseite der Stirnwand 5 ist eine Statorscheibe 10 angeordnet, welche zusammen mit einer ersten, auf der Welle 4 angeordneten Rotorscheibe 11 eine erste Einheit 12 bildet. Von der Kammer 8 ragen Düsen 13 durch die Stirnwand 5 und die Statorscheibe 10 hindurch und münden direkt vor der Rotorscheibe 11. Das Gehäuse 1 umschließt noch zwei weitere, gleichartig aufgebaute Statorscheiben-Rotorscheiben-Einheiten 12, welche in Reihe angeordnet sind. Hinter der letzten Einheit 12 verengt sich das Gehäuse biz zu einem Laufrad 14. In dessen Bereich ist ein Abführstutzen 15 vorgesehen. Sowohl die Statorscheiben 10 als auch die Rotorscheiben 11 sind mit Stiften als Rührelemente 16 versehen, welche in form von konzentrischen, ineinandergreifenden Kränzen angeordnet sind. Die Stirnfläche 17 der Welle 4 ist zum Einlaß 6 hin zugespitzt.

In Fig. 2 besteht der Mischer aus einem Gehäuse 21 und einem Rotor 22. In einer Stirnwand 23 ist die Welle 24 des Rotors 22 geführt und nach außen hermetisch abgedichtet. Der Antrieb erfolgt über eine nicht dargestellte Magnetkupplung. Die andere Stirnwand 25 ist axial zur Welle 24 mit einem Zuführstutzen bzw. Einlaß 26 für einen ersten Stoff versehen. Der Stirnwand 25 vorgeordnet ist eine Haube 27, welche eine Kammer 28 bildet. In diese mündet eine Zuführung 29 für einen zweiten Stoff. An der Innenseite der Stirnwand 25 ist eine Statorscheibe 30 angeordnet, welche mit einer auf der Welle 24 angeordneten ersten Rotorscheibe 31 eine Einheit 32 bildet. Durch die Stirnwand 25 und die Statorscheibe 30 ragen aus der Kammer 28 gespeiste Düsen 33 und münden direkt vor der ersten Rotorscheibe 31. Es sind noch zwei weitere Statorscheiben-Rotorscheiben-Einheiten 32 vorgesehen, wobei zwischen der zweiten und dritten Einheit 32 eine zusätzliche Statorscheibe 34 sowie ein erstes Laufrad 35 vorgesehen sind. Hinter der dritten Einheit 32 schnürt sich das Gehäuse 21 bis zu einem zweiten Laufrad 35 ein, aus dessen Bereich ein Abführstutzen 36 vom Gehäuse 21 abführt. Die erste Statorscheibe 30 dient im vorliegenden Ausführungsbeispiel zur Aufnahme der Düsen 33, während die weiteren Statorscheiben 30 und Rotorscheiben 31 Schlitze als Rührelemente 37 aufweisen. Die Stirnfläche 38 der Welle 24 ist zum Einlaß 26 hin zugespitzt. Das Gehäuse 21 ist mit einem Temperiermantel 39 versehen.

## Patentansprüche

1.   Mischer zum Vermischen mindestens zweier fließfähiger Stoffe, insbesondere unter Durchführung bzw. Einleitung einer Reaktion während der Vermischung, bestehend aus einem Gehäuse (1, 21), in welchem eine mit mindestens einer Rotorscheibe (11, 31) besetzte Welle (4, 24) angeordnet ist, wobei das Gehäuse (1, 21) mit Einlässen (6, 26; 13, 33) für mindestens zwei Stoffe und einem Auslaß (15, 36) versehen ist und die Einlässe (2, 26; 13, 33) in einer Stirnwand (5, 25) des Gehäuses (1, 21) und der Auslaß (15, 36) am anderen Ende des Gehäuses (1, 21) angeordnet sind, wobei ein Einlaß (6, 26) axial zu der mit einer zugespitzten Stirnfläche (17, 38) versehenen Welle (4, 24) zur Zuführung des eines Stoffes und - mit Abstand davon - mindestens ein weiterer Einlaß (13, 33) zur Zuführung mindestens eines weiteren Stoffes vorgesehen sind, daß mindestens eine Rotorscheibe (11, 31) mit einer vorgeordneten Statorscheibe (10, 30) eine Einheit (12, 32) bildet, wobei der Einlaß (13, 33) für den weiteren Stoff direkt gegen die Rotorscheibe (11, 31) mündet, dadurch gekennzeichnet, daß die zugespitzte Stirnfläche (17, 38) der Welle (4, 24) als Spitzkegel ausgebildet ist und unmittelbar auf der ersten Rotorscheibe (11, 31) angeordnet ist und daß der Einlaß (13, 33) für den weiteren Stoff außerhalb des Bereiches des Spitzkegels (17, 38) gegen die erste Rotorscheibe (11, 31) weist.

2. Mischer nach Anspruch 1, dadurch gekennzeichnet, daß bei mehreren Statorscheiben-Rotorscheiben-Einheiten (32) mindestens ein Laufrad (35) zwischen den Statorscheiben-Rotorscheiben-Einheiten (32) angeordnet ist.

**Claims**

1. A mixer for mixing at least two free-flowing substances, more particularly for bringing about or starting a reaction during mixing, the mixer comprising a casing (1, 21) containing a shaft (4, 24) bearing at least one rotor disc (11, 31), the casing (1, 21) having inlets (6, 26; 13, 33) for at least two substances and also having an outlet (15, 36), and the inlets (2, 26; 13, 33) being disposed in an end wall (5, 25) of the casing (1, 21) and the outlet (15, 36) being disposed at the other end of the casing (1, 21), an inlet (6, 26) for supplying one substance being disposed coaxially with the shaft (4, 24), which has a pointed end surface (17, 38), and at least one other inlet (13, 33) for supplying at least one other substance being provided at a distance from the first inlet, at least one rotor disc (11, 13) and one stator disc (10, 30) disposed in front of it forming a unit (12, 32), and the inlet (13, 33) for the other substance opens directly towards the rotor disc (11, 31), characterised in that the pointed end face (17, 38) of the shaft (4, 24) is a pointed cone and is disposed directly on the first rotor disc (11, 31), and the inlet (13, 33) for the other substance is directed towards the first rotor disc (11, 31) out of range of the pointed cone (17, 38).

2. A mixer according to claim 1, characterised in that when there are a number of stator disc/rotor disc units (32), at least one impeller (35) is disposed between the stator disc/rotor disc units (32).

**Revendications**

1. Mélangeur pour le mélange d'au moins deux substances fluides, en particulier avec exécution ou introduction d'une réaction pendant le mélange, composé d'un boîtier (1, 21) dans lequel est disposé un arbre (4, 24) comportant au moins un disque de rotor (11, 31), le boîtier (1, 21) étant muni d'entrées (6, 26 ; 13, 33) pour au moins deux substances et d'une sortie (15, 36) et les entrées (2, 26 ; 13, 33) étant disposées dans un tablier (5, 25) du boîtier (1, 21) et la sortie (15, 36) à l'autre extrémité du boîtier (1, 21), une entrée (6, 26) étant placée axialement par rapport à l'arbre (4, 24) muni d'une face avant conique (17, 38) pour l'alimentation de la première substance et - à distance de celle-ci - au moins une autre entrée (13, 33) pour l'alimentation d'au moins une autre substance étant prévue, qu'au moins un disque de rotor (11, 31) forme un ensemble (12, 32) avec un disque de stator (10, 30) placé devant, l'entrée (13, 33) pour l'autre substance débouchant directement contre le disque de rotor (11, 31), caractérisé en ce que la face avant conique (17, 38) de l'arbre (4, 24) est configurée comme un cône pointu et est disposée directement sur le premier disque de rotor (11, 31) et que l'entrée (13, 33) pour l'autre substance à l'extérieur de la zone du cône pointu (17, 38) est en face du premier disque de rotor (11, 31).

2. Mélangeur suivant la revendication 1, caractérisé en ce que dans le cas de plusieurs ensembles de disques de stator/disques de rotor (32), au moins une roue à aubes (35) est disposée entre les ensembles de disques de stator/disques de rotor (32).

FIG. 1

FIG. 2